# EUROPEAN PATENT SPECIFICATION

(11) **EP 1 080 054 B1**
(45) Date of publication and mention of the grant of the patent: **03.12.2003**
(21) Application number: 99925048.3
(22) Date of filing: 14.05.1999
(51) Int. Cl.: C05B 19/00

(54) **PROCESS FOR THE PREPARATION OF COMPOUND FERTILIZERS**
VERFAHREN ZUR HERSTELLUNG VON DÜNGEMITTELZUSAMMENSETZUNGEN
PROCEDE DE PREPARATION DE FERTILISANTS DE COMPOSES

(30) Priority: 15.05.1998 FI 981087
(43) Date of publication of application: 07.03.2001
(73) Proprietor: Kemira GrowHow Oy, 00180 Helsinki (FI)
(72) Inventor: JUUTINEN, Osmo, FIN-03100 Nummela (FI)
(74) Representative: Pelin, Torolf
(86) International application number: FI9900418
(87) International publication number: WO99059938

(56) References cited:
- FR-A- 1 323 860
- FR-A1- 2 437 386
- GB-A- 1 114 128
- GB-A- 1 147 545

## Description

The present invention relates to a process for the preparation of a fertilizer, a so-called multiple-suspension process by which - in deviation from the process of one raw-material suspension - the fertilizer is prepared from two or more raw-material suspensions of different compositions. In a multiple-suspension process, separately prepared raw-material suspensions are fed into a granulator separately or combined immediately before the granulation.

The conventional steps in fertilizer production are preparation of a raw-material suspension, granulation of the suspension, drying of the granules, screening, crushing of granules larger than the product size, recycling of granules deviating from the product size into the granulator, and cooling and coating of the product.

One key classification basis for compound fertilizers is the method by which the phosphorus of a phosphate or apatite concentrate, or at least a portion thereof, is brought into a form usable for plants, i.e. a soluble form.

The so-called "Mixed Acid Process" (Booklet No. 8 of 8: "Production of NPK fertilizers by mixed acid route," EFMA, 1995, p. 13-15.) is a commonly known single-suspension process in which, for example, the raw-material suspension of a NPK compound fertilizer is prepared in a reactor system coupled in series by dissolving a phosphate concentrate in nitric acid, whereupon an acid solution which contains phosphoric acid and calcium nitrate is formed. The solution is neutralized with ammonia, and, depending on the product, the other raw materials are added to it, such as phosphoric or sulfuric acid, ammonium phosphates, superphosphates, ammonium sulfate, potassium raw materials, trace elements, etc. The above-mentioned ingredients may also be added before or during the neutralization of the suspension. As the final result there is formed a supersaturated salt solution, i.e. the raw-material suspension, which is fed into the granulator.

The monoammonium phosphate formed as the product of the neutralization of phosphoric acid crystallizes strongly within a pH range of 3-5, causing a strong viscosity increase in the raw-material suspension. In general it is not possible to prepare phosphorus-containing fertilizers by the single-suspension process within the pH range mentioned above, owing to the poor fluidity of the suspension.

In order to avoid the problem of viscosity in the preparation of the suspension, the pH has to be maintained within a specific narrow pH range (5.0-6.0), and thus it is not possible significantly to affect the salt composition of the product, and the chemical and physical properties dependent thereon, by pH regulation. In order to avoid the viscosity problem it is also necessary to add water to the suspension, so that the water content in the completed suspension, before the suspension is fed into the granulator, will be high, being up to 15-30 %, depending on the type. The high water content causes problems and additional costs at the granulation and drying stage.

For example, FI patent publication 50963 describes one process still in use for the preparation of raw-material suspensions which contain nitrogen, phosphorus and potassium and are suitable for the preparation of various compound fertilizers. Also in the process described therein there is the problem of a need for regulating the pH precisely at various stages of the process and a need for adding water in order to ensure the fluidity of the raw-material suspension.

In particular the preparation of sulfate-based NPK fertilizers by the single-suspension process has in general proven to be impossible owing to suspension viscosity problems and/or product quality problems, if the raw material used is In the preparation of a phosphorus-containing fertilizer the objective is in general that as large a proportion as possible of the phosphorus present in the product should be in a water-soluble form. When a fertilizer is being prepared by the single-suspension process, the binding of phosphorus into water-insoluble calcium compounds (degeneration of the phosphorus) during the neutralization step lowers the amount of water-soluble phosphorus in the product.

FR 1 323 860 describes a method for the production of granulated mixed fertilizers, and GB 1 114 128 describes production of dried granular chemical products. Both of these two publications relate to production of layered granules.

FR 2 437 386 discloses a process for the preparation of diammonium phosphate in the form of granules.

GB 1 147 545 discloses a process for the production of fertilizer granules from a mixture of phosphoric acid and sulphuric acid. The mixture is first partially neutralized in a preneutralizer vessel by addition of ammonia in an amount sufficient to neutralize all of the sulphuric acid and in an additional amount sufficient to maintain the ammonia to phosphoric acid mole ratio at a level not greater than 0.8. Thereby a slurry of ammonium salts is formed while fluidity of the slurry as formed is maintained.

The present invention relates to a process for the preparation of a fertilizer, a so-called multiple-suspension process by which - in deviation from the process of the normal one raw-material suspension - the fertilizer is prepared from two or more raw-material suspensions. Raw-material suspensions of different compositions are prepared in reactors or reactor systems coupled in parallel, and are fed into a granulator separately or combined immediately before the granulation.

The invention according to the application is characterized in what is stated in the patent claim.

In accordance with the present invention, a so-called multiple-suspension process, two or more raw-material suspensions of different compositions are prepared in reactors or reactor systems coupled in parallel and are fed into the granulator separately or combined immediately before the granulation.

The different suspensions can also be prepared by dissolving a solid raw material, such as ammonium phosphate or other conventional raw materials, in water. Solid raw materials can also be fed alongside suspensions directly into the granulator, if such feeding is possible, depending on the granulator type.

By the use of the multiple-suspension process it is possible to gain, among others, the following advantages: Since the raw materials fed into the different suspensions come into contact with one another only during the granulation step or immediately before it, their retention combined in the liquid phase will be short. Thus the mutual reactions of the raw materials fed into the different suspensions, and consequently also the salt composition of the product, will be different from those obtained when the same product is prepared by a normal single-suspension process. By a change of the salt composition it is possible to affect the chemical and physical properties of the product and to improve them.

According to the principle of the multiple-suspension process, for example, an NPK fertilizer can be prepared by neutralizing phosphoric acid in a different reactor or reactor system than the other acids (nitric and sulfuric acid). The neutralization of phosphoric acid can in this case be left at a level at which the crystallization of the monoammonium phosphate formed during the neutralization will not yet cause a sharp rise in the viscosity (pH<3). The raw-material suspension prepared in the other reactor or reactor system can be neutralized to a higher pH level (pH>5). When the raw-material suspensions are combined during the granulation step or immediately before it, the pH of the product will settle within a range of 3-5. The granulability and quality of the product can be affected by the regulation of the pH of the product. Owing to the viscosity problem, in the normal process of a single raw-material suspension it is in general not possible to neutralize a phosphorus-containing suspension to a pH range of 3-5 and to prepare a fertilizer within the said pH range.

By the use of the multiple-suspension process it is possible to solve viscosity problems also in cases in which certain raw materials, when combined in a liquid phase, form compounds which strongly increase the viscosity. According to the multiple-suspension process, the said raw materials are fed into separate reactors or reactor systems, and thus they cannot react with one another in the liquid phase.

Furthermore, when phosphoric acid is neutralized in accordance with the multiple-suspension process in a separate reactor or reactor system, the formation of insoluble phosphorus compounds, i.e. the degeneration of phosphorus, decreases and, respectively, the proportion of water-soluble phosphorus in the product increases.

The same proportion of water-soluble phosphorus of the total phosphorus amount in the product is achieved by the multiple-suspension process by using a lower amount of phosphoric acid than in the single-suspension process. Thus, when the multiple-suspension process is used, the amount of phosphoric acid can be decreased and the amount of a phosphorus raw material less expensive than phosphoric acid, such as a phosphate or apatite concentrate, can be increased, whereupon considerable savings can be achieved in the raw-material costs as regards the phosphorus raw material.

The invention is clarified below with the help of examples, but without limiting it only to the said examples.

In order to show the functioning of the invention, the following trial runs were performed on a pilot scale (Examples 1 and 2) at the Espoo research center of Kemira Agro Oy and on an industrial scale (Example 3) at the Uusikaupunki plant of Kemira Agro Oy. Example 4 shows analyses and physical properties of factory products prepared by the multiple-suspension process.

### Example 1

### Preparation of a sulfate-based NPK fertilizer 12-12-17 by the multiple-suspension process from two separate raw-material suspensions

**Table 1**

| **Formulation** | | |
|---|---|---|
| nitric acid | 197 | kg/t |
| phosphate | 77 | kg/t |
| sulfuric acid | 45 | kg/t |
| phosphoric acid (P₂O₅) | 95 | kg/t |
| ammonia | 96 | kg/t |
| potassium sulfate | 343 | kg/t |
| magnesium sulfate | 15 | kg/t |
| filler (sand) | 58 | kg/t |

The amounts of the acids are given in the formulation as 100-percent acids. The concentration of the nitric acid used in the trial run was 60 % by weight, that of the sulfuric acid 93 % by weight and that of the phosphoric acid 50 % by weight (P₂O₅).

Raw-material suspension 1 was prepared in a continuous-working manner in a system of three overflow reactors coupled in series, as follows:

In the first reactor of the reactor system, the phosphate was dissolved in nitric acid. The sulfuric acid was fed into the second reactor, and the solution was neutralized with ammonia to a pH value of 2.4. The potassium sulfate and magnesium sulfate were fed into the third reactor, and the solution was neutralized with ammonia to a pH value of 6.3. The temperature of the suspension before granulation was 117 °C and its water content was 9 %.

Raw-material suspension 2 was prepared by neutralizing phosphoric acid with ammonia in a separate reactor to a pH value of 1.9. The temperature of the suspension before the granulation was 115 °C and its water content was 19 %.

The raw-material suspensions were combined in a spray nozzle immediately before their being sprayed into the granulator-dryer.

In a reference trial run performed by the normal process of a single raw-material suspension, the viscosity of the suspension after the adding of the potassium sulfate rose to so high a level that it was not possible to spray the suspension into the granulator even at a water content of 30 %, and thus it was not possible to prepare the product.

**Table 2**

| **Analysis of the product** | | |
|---|---|---|
| N | (%) | 11.5 |
| NO₃ | (%) | 4.6 |
| NH₄ | (%) | 6.9 |
| P₂O₅ | (%) | 11.8 |
| P₂O₅-water-sol. | (%) | 10.8 |
| P₂O₅-ws/P₂O₅ | (%) | 91.5 |
| K₂O | (%) | 18.0 |
| K₂O-ws | (%) | 17.9 |
| S | (%) | 8.4 |
| Mg | (%) | 0.51 |
| H₂O | (%) | 0.27 |
| pH | ( ) | 3.7 |

**Table 3**

| **Physical properties of the product** | | |
|---|---|---|
| granule strength | (N) | 91 |
| abrasion | (%) | 1.2 |
| dust | (mg/kg) | 100 |
| bulk density | (kg/l) | 1.068 |
| caking | (%) | 0 |
| moisture | (%) | 0.36 |
| caking | (%) | 0 |
| moisture | (%) | 0.62 |
| caking | (%) | 0 |
| moisture | (%) | 0.80 |
| combustibility | (cm/h) | 0 |

### Example 2

### Preparation of a sulfate-based NPK fertilizer 20-6.9-3.6+5Na

**Table 4**

| **Formulation** | | |
|---|---|---|
| nitric acid | 409 | kg/t |
| phosphate | 26 | kg/t |
| sulfuric acid | 12 | kg/t |
| phosphoric acid (P₂O₅) | 59 | kg/t |
| ammonia | 133 | kg/t |
| potassium sulfate | 73 | kg/t |
| sodium sulfate | 156 | kg/t |
| magnesium sulfate | 43 | kg/t |
| manganese sulfate | 31 | kg/t |
| colemanite | 8 | kg/t |

The amounts of the acids are shown in the formulation as 100-percent acids. The concentration of the nitric acid used in the trial run was 60 % by weight, that of the sulfuric acid 93 % by weight and that of the phosphoric acid 50 % by weight (P₂O₅).

In a reference trial run performed by the normal process of a single raw-material suspension, the suspension was prepared in a continuous-working manner in a system of three overflow reactors coupled in series, as follows:

In the first reactor of the reactor system, the phosphate was dissolved in the nitric acid. The sulfuric acid was fed into the second reactor, and the solution was neutralized with ammonia to a pH value of 4.8. The phosphoric acid, potassium sulfate, sodium sulfate, magnesium sulfate, manganese sulfate and colemanite were fed into the third reactor, and the solution was neutralized with ammonia to a pH value of 5.2. The temperature of the suspension before the granulation was 130 °C and its water content was 8.9 %. The completed raw-material suspension was sprayed into the granulator-dryer.

In a trial run performed by the multiple-suspension process, the separate raw-material suspensions were prepared as follows: Suspension 1 was prepared in a continuous-working manner in a system of three overflow reactors coupled in series. In the first reactor of the reactor system, the phosphate was dissolved in the nitric acid. The sulfuric acid was fed into the second reactor, and the solution was neutralized with ammonia to a pH value of 5.4. The potassium sulfate, sodium sulfate, magnesium sulfate, manganese sulfate and colemanite were fed into the third reactor, and the solution was neutralized with ammonia to a pH value of 6.0. The temperature of the solution before the granulation was 133 °C and its water content was 6.9 %.

Suspension 2 was prepared by neutralizing phosphoric acid with ammonia in a separate reactor to a pH value of 2.1. The temperature of the suspension before the granulation was 100 °C and its water content was 28 %.

The suspensions were combined in a spray nozzle immediately before their being sprayed into the granulator-dryer.

**Table 5**

| **Analyses of the products** | | | |
|---|---|---|---|
| | | Single-suspension process | Multiple-suspension process |
| | | | |
| N | (%) | 20.8 | 20.6 |
| NO₃ | (%) | 9.6 | 9.8 |
| NH₄ | (%) | 11.2 | 10.8 |
| P₂O₅ | (%) | 7.1 | 6.7 |
| P₂O₅-ws | (%) | 5.0 | 6.3 |
| P₂O₅-ws/P₂O₅ | (%) | 70.4 | 94.0 |
| K₂O | (%) | 3.5 | 3.6 |
| K₂O-ws | (%) | 3.5 | 3.6 |
| Na | (%) | 5.1 | 4.8 |
| Na-ws | (%) | 4.9 | 4.8 |
| S | (%) | 6.7 | 6.7 |
| Mg | (%) | 0.95 | 0.99 |
| Mg-ws | (%) | 0.89 | 0.98 |
| Mn | (%) | 1.0 | 0.89 |
| B | (%) | 0.081 | 0.092 |
| Cl | (%) | 0.07 | 0.05 |
| H₂O | (%) | 0.45 | 0.65 |
| pH | ( ) | 5.2 | 3.3 |

**Table 6**

| **Salt compositions of the products (X-ray diffraction analysis)** | | | |
|---|---|---|---|
| | Single-suspension process | | Multiple-suspension process |
| | | | |
| NH₄H₂PO₄ | (%) | 6.05 | 8.19 |
| K₂SO₄ | (%) | 1.75 | 0.95 |
| N₃ | (%) | 14.61 | 42.90 |
| - NH₄NO₃ | (%) | 88.37 | 87.46 |
| - KNO₃ | (%) | 11.63 | 12.54 |
| 3NH₄NO₃*(NH₄)₂SO₄ | (%) | 35.47 | 16.37 |
| 2NO₄NO₃*NH₄KSO₄ | (%) | 11.18 | 4.36 |
| (NH₄)₂SO₄ | (%) | - | 2.97 |
| CaHPO₄ | (%) | 2.75 | 2.01 |
| Ca₅(PO₄)₃F | (%) | - | 0.07 |
| NaNO₃ | (%) | 16.38 | 14.63 |
| Na₂SO₄ | (%) | 2.30 | 0.64 |
| MgSO₄ | (%) | 3.51 | 0.91 |

**Table 7**

| **Physical properties of the products** | | | |
|---|---|---|---|
| | Single-suspension process | | Multiple-suspension process |
| | | | |
| abrasion | (%) | 0.1 | 0.1 |
| dust | (mg/kg) | 400 | 100 |
| bulk density | (kg/l) | 0.926 | 0.927 |
| roundness | (%) | 3 | 22 |
| caking | (%) | 37.4 | 0 |
| moisture | (%) | 0.58 | 0.83 |
| caking | (%) | 81.0 | 38.4 |
| moisture | (%) | 1.45 | 2.15 |
| combustibility | (cm/h) | 0 | 0 |

### Example 3

### Preparation of a sulfate-based NPK fertilizer 15-15-15 by the multiple-suspension process from two separate raw-material suspensions

**Table 7**

| **Formulation** | | |
|---|---|---|
| nitric acid | 286 | kg/t |
| phosphate | 76 | kg/t |
| sulfuric acid | 4 | kg/t |
| phosphoric acid (P₂O₅) | 125 | kg/t |
| ammonia | 107 | kg/t |
| potassium sulfate | 309 | kg/t |
| magnesium sulfate | 19 | kg/t |

The amounts of the acids are shown in the formulation as 100-percent acids. The concentration of the nitric acid used in the trial run was 60 % by weight, that of the sulfuric acid 70 % by weight and that of the phosphoric acid 50 % by weight (P₂O₅).

Raw-material suspension 1 was prepared in a continuous-working manner in a system of two overflow reactors coupled in series, as follows:

In the first reactor, the phosphate was dissolved in the nitric acid. The sulfuric acid and the potassium sulfate were fed into the second reactor, and the solution was neutralized with ammonia to a pH value of 5.9. The temperature of the suspension before the granulation was 133 °C and its water content was 9.6 %.

Raw-material suspension 2 was prepared by neutralizing phosphoric acid with ammonia in a separate reactor to a pH value of 2.5 and by feeding the magnesium sulfate to the suspension. The temperature of the suspension before the granulation was 133 °C and its water content was 7.9 %.

The suspensions were sprayed separately into the granulator-dryer.

**Table 8**

| **Analysis of the product** | | |
|---|---|---|
| N | (%) | 15.7 |
| NO₃ | (%) | 7.3 |
| NH₄ | (%) | 8.4 |
| P₂O₅ | (%) | 14.6 |
| P₂O₅-ws | (%) | 13.7 |
| P₂O₅-ws/P₂O₅ | (%) | 93.8 |
| K₂O-ws | (%) | 14.6 |
| S | (%) | 5.6 |
| Mg | (%) | 0.63 |
| Mg-ws | (%) | 0.61 |
| H₂O | (%) | 1.0 |
| pH | ( ) | 3.3 |

**Table 9**

| **Physical properties of the product** | | |
|---|---|---|
| granule strength | (N) | 107 |
| abrasion | (%) | 0.1 |
| dust | (mg/kg) | <100 |
| bulk density | (kg/l) | 1.104 |
| caking | (%) | 0 |
| moisture (oven) | (%) | 1.15 |
| caking | (%) | 5.5 |
| moisture (oven) | (%) | 1.77 |

### Example 4

### Physical properties of factory products prepared by the multiple-suspension process

**Table 10**

| **Analyses of the products** | | | | |
|---|---|---|---|---|
| Grade | | 15-15-15 | 16-16-16 | 25-7-7 |
| | | | | |
| N | (%) | 15.4 | 15.9 | 24.9 |
| NH₄ | (%) | 8.3 | 8.8 | 12.7 |
| NO₃ | (%) | 7.1 | 7.1 | 12.2 |
| P₂O₅ | (%) | 14.3 | 15.2 | 6.8 |
| P₂O₅-ws | (%) | 13.0 | 14.4 | 6.1 |
| P₂O₅-ws/P₂O₅ | (%) | 90.9 | 94.7 | 89.7 |
| K₂O | (%) | 15.9 | 15.9 | 6.8 |
| K₂O-ws | (%) | 15.9 | 15.8 | 6.8 |
| S | (%) | 4.6 | 3.5 | 2.3 |
| Mg | (%) | 0.27 | 0.25 | 0.61 |
| Mg-ws | (%) | 0.27 | 0.25 | 0.60 |
| Cl | (%) | 3.3 | 5.5 | 1.9 |
| H₂O | (%) | 0.44 | 0.59 | 1.4 |
| H₂O extraction | (%) | 0.17 | 0.15 | 0.07 |
| pH | ( ) | 3.8 | 3.4 | 3.7 |

**Table 11**

| **Physical properties of the products** | | | | |
|---|---|---|---|---|
| Grade | | 15-15-15 | 16-16-16 | 25-7-7 |
| | | | | |
| granule strength | (N) | 95 | 103 | 89 |
| abrasion | (%) | 0.2 | 0.2 | 0.1 |
| dust | (mg/kg) | 200 | 200 | 100 |
| bulk density | (kg/l) | 1.144 | 1.110 | 1.053 |
| roundness | (%) | 77 | 74 | 64 |
| flow rate | (kg/min) | 7.48 | 7.63 | 7.12 |
| caking | (%) | 0 | 0 | 0 |
| moisture (oven) | (%) | 0.34 | 0.51 | 0.98 |
| caking | (%) | 2.6 | 0.3 | 34.2 |
| moisture (oven) | (%) | 0.84 | 1.11 | 1.61 |
| combustibility | (cm/h) | 0 | 0 | 0 |

**Table 12**

| **Physical properties of the products after 2 months of storage** | | | | |
|---|---|---|---|---|
| Grade | | 15-15-15 | 16-16-16 | 25-7-7 |
| | | | | |
| granule strength | (N) | 104 | 83 | 105 |
| abrasion | (%) | 0.1 | 0 | 0 |
| dust | (mg/kg) | 200 | 200 | 100 |
| flow rate | (kg/min) | 7.84 | 7.84 | 7.35 |
| caking | (%) | 0 | 0 | 0 |
| moisture (oven) | (%) | 0.35 | 0.48 | 0.93 |
| clod formation | (%) | 1.4 | 3.4 | 38.0 |
| moisture (oven) | (%) | 1.00 | 1.33 | 1.83 |

The computational expected value, based on the amounts of phosphoric acid and phosphate, for the proportion of water-soluble phosphorus of the total phosphorus amounts in the products prepared by the single-suspension process was approx. 70 %. The results achieved by the multiple-suspension process were within the range 89.7-94.7 %. The most important physical properties of the products prepared by the multiple-suspension process were very good even after storage (Example 4).

The properties of products prepared by the single-suspension process and by the multiple-suspension process can be compared on the basis of Example 2. The proportion of water-soluble phosphorus of the total phosphorus amount in the product prepared by the single-suspension process was 70.4 %. With the same amounts of phosphate and phosphoric acid used, the result obtained by the multiple-suspension process was 94.0 %. The X-ray diffraction analyses show the deviating salt compositions of the products prepared by the different processes. The most important physical properties of the product prepared by the multiple-suspension process were considerably better than the properties of the product prepared by the single-suspension process.

## Claims

1. A multiple-suspension process for the preparation of compound fertilizer comprising phosphorous, **characterized in that** the fertilizer is prepared from at least two raw-material suspensions of different compositions, the first suspension comprising phosphoric acid and being neutralized separately from other acids to a pH of less than 3, so that the crystallization of the monoammonium phosphate formed during the neutralization does not cause a sharp rise in the viscosity, and the second suspension comprising other acid(s) and being neutralized to a pH of more than 5, and **in that** the suspensions are fed into a granulator either separately or combined immediately before the granulation-drying.

2. A multiple-suspension process according to claim 1, **characterised in that** the first suspension is neutralized to pH<3.

3. A multiple-suspension process according to claim 1 or 2, **characterised in that** the second suspension is neutralized to pH>5.

## Patentansprüche

1. Ein Verfahren auf der Basis mehrerer Suspensionen zur Herstellung von Volldünger, der Phosphor enthält, **dadurch gekennzeichnet, dass** der Dünger aus mindestens zwei Basissuspensionen unterschiedlicher Zusammensetzung dargestellt wird, wobei die eine Lösung Phosphorsäure enthält und getrennt von den anderen Säuren auf einen pH-Wert unter 3 neutralisiert wird, so dass die Kristallisierung des Monoammonium-phosphats, gebildet während der Neutralisation, keinen plötzlichen Anstieg der Viskosität verursacht, und die zweite Suspension eine oder mehrere weitere Säuren umfasst, die auf einen pH-Wert über 5 neutralisiert werden, sowie dadurch, dass die Suspensionen unmittelbar vor dem Trocknen des Granulats entweder getrennt oder zusammen in einen Granulator gegeben werden.

2. Ein Verfahren auf der Basis mehrerer Suspensionen nach Anspruch 1 **gekennzeichnet dadurch, dass** die erste Suspension auf einen pH-Wert unter 3 neutralisiert wird.

3. Ein Verfahren auf der Basis mehrerer Suspensionen nach Anspruch 1 oder 2, **gekennzeichnet dadurch, dass** die zweite Suspension auf einen pH-Wert über 5 neutralisiert wird.

## Revendications

1. Procédé à suspension multiple pour la préparation d'engrais comprenant du phosphore, **caractérisé en ce que** l'engrais est préparé à partir d'au moins deux suspensions de matière première de compositions différentes, la première suspension comprenant de l'acide phosphorique et étant neutralisée séparément des autres acides à un pH inférieur à 3, de façon que la cristallisation du phosphate monoammonique formée pendant la neutralisation ne provoque pas une brusque augmentation dans la viscosité, et la seconde suspension comprenant d'autres acides et étant neutralisée à un pH supérieur à 5, et les suspensions sont introduites dans un appareil de granulation, soit séparément, soit combinées immédiatement avant le séchage de la matière granulaire.

2. Procédé à suspension multiple selon la revendication 1, **caractérisé en ce que** la première suspension est neutralisée à un pH inférieur à 3.

3. Procédé à suspension multiple selon la revendication 1 ou 2, **caractérisé en ce que** la seconde suspension est neutralisée à un pH supérieur à 5.
